# EUROPÄISCHE PATENTSCHRIFT

(11) **EP 1 625 427 B1**
(45) Veröffentlichungstag und Bekanntmachung des Hinweises auf die Patenterteilung: **21.03.2007**
(21) Anmeldenummer: 04729848.4
(22) Anmeldetag: 28.04.2004
(51) Int. Cl.: G02B 5/00, G01J 3/04, G03B 9/06

(54) **EINSTELLBARES PINHOLE**
ADJUSTABLE PINHOLE
STENOPE REGLABLE

(30) Priorität: 22.05.2003 DE 10323922
(43) Veröffentlichungstag der Anmeldung: 15.02.2006
(73) Patentinhaber: CARL ZEISS JENA GmbH, 07745 Jena (DE)
(72) Erfinder: LASSER, Theo, CH-1026 DENGES (CH); LOPEZ, Antonio, 1020 Renens (CH); SIDLER, Thomas, CH-1304 Cossonay (CH); FAVRE, Sebastian, 2300 La Chaux-de-Fonds (CH); GIANOTTI, Ronald, 1112 Echichens (CH)
(74) Vertreter: Hampe, Holger
(86) Internationale Anmeldenummer: PCT/EP2004/004498
(87) Internationale Veröffentlichungsnummer: WO 2004/104647

(56) Entgegenhaltungen:
- EP-A- 0 280 375
- US-A- 4 047 808
- US-A- 5 206 765
- PATENT ABSTRACTS OF JAPAN Bd. 1997, Nr. 10, 31. Oktober 1997 (1997-10-31) & JP 9 159935 A (OLYMPUS OPTICAL CO LTD), 20. Juni 1997 (1997-06-20)

## Beschreibung

In DE 20205079 U1 ist ein scherenartiger Verschlußmechanismus für ein Pinhole beschrieben.

Hier ist vor allem die Fertigungsgenauigkeit der Winkelstellen, die sich gegenüberstehen und über die Drehachse gegeneinander bewegt werden sollen, ein ernsthaftes Hindernis für eine reproduzierbare und lichtdichte Schließung und exakte quadratische Form der Pinholeöffnung.

Weitere relevante Druckschriften sind EP 0 280 375 A und JP 9 159 935 A.

Eine Positionsbestimmung wird z.B in JP 2001 209 965 offenbart.

Die Aufgabe besteht darin, ein hochgenaues Pinhole herzustellen, das sich lichtdicht verschließen läßt und dessen Öffnung ab der Größe Null eine quadratische Form aufweist.

Die Aufgabe wird durch das einstellbare Pinhole nach Anspruch 1 gelöst.

Bevorzugte Weiterbildungen sind Gegenstand der Unteransprüche.

Die besonderen Vorteile der Erfindung bestehen in einem quasi-monolithischen und sehr flachen design in "sandwich" -Bauweise, wobei erfindungsgemäß auch eine optische Positionsmesseinheit direkt integriert werden kann.

Die Kontrolle der Pinholestellung kann in einer geschlossenen Meßschleife erfolgen ohne daß Hystereseeffekte auftreten.

Die Erfindung kann mit einer Mannigfaltigkeit von Materialien realisiert werden, u.a. mit Silizium- Wafermaterial. Dadurch kann die miniaturisierte Bauweise weiter miniaturisiert werden.

Der Verbrauch an Energien zur Ansteuerung ist gering.

Die Produktionskosten sind überraschend gering.

Der Grundbaustein besteht aus mindestens einer monolithischen ebenen Struktur, die im Innern mindestens eine herausgeformte Schneide aufweist, die von elastischen Gelenken gehalten wird und vorteilhaft mindestens zwei in fester Raumbeziehung stehende Dreiecke mit entgegengesetzter Orientierung enthält, die zur Positionskontrolle dienen (Optische Positionsmesseinheit OPM).

Die Positionskontrolle besteht weiterhin aus flachen Strukturen, vorzugsweise aus dem gleichen Material wie die Grundbausteine, die kleine Lichtquellen (zum Beispiel LED) bzw. bezüglich ihrer Abmessungen angepasste Empfänger beinhalten und in Sandwichstruktur an die Grundbausteine anschließen. Auf die Funktion des OPM wird noch in der weiteren Beschreibung noch näher eingegangen.

Die Schneiden der Grundbausteine sind zueinander parallel und können angeschrägt werden, um eine bessere Schliessung zu erzielen.

Die mechanische Anordnung der integrierten Bewegungselemente, hier vorzugsweise eine Parallelogrammaufhängung, sichert die Parallelität der beiden

Schneiden, die zueinander verschieblich sind.

Der Bewegung der Schneiden erfolgt mittels miniaturisierten Magnetaktuatoren, vorzugsweise, aber nicht ausschließlich, vom moving magnet type, wobei innerhalb einer elektrischen Spule ein oder mehrere Permanentmagnete oder ein andersgearteter elektromagnetischer Aktuator verschieblich angeordnet ist.

Die Magnetaktuatoren sind dabei vorteilhaft auf derselben planaren Struktur wie die Schneiden angeordnet und bewegen die Schneiden.

Die Koppelung der beweglichen Scheiden mit den optichen Positionsmesseinheiten erlaubt eine Schneidensteuerung mit einem geschlossenen Regelkreis.

Mit dem erfindungsgemäßen Pinhole sind folgende Spezifikationen mindestens realisierbar:
- Öffnungen von 3-300µm Durchmesser
- ein driftfreier Bewegungsbereich von +/- 300µm
- eine Reproduzierbarkeit in Position und Schneidenöffnung unterhalb 500nm
- ein kompakter Aufbau in einem Bereich kleiner 50x50x20mm
- eine Kantengenauigkeit kleiner 0,8 µm
- eine hohe Steifigkeit der Schneiden ( geringe axiale Überdeckungsfehler)
- Unabhängigkeit von der Wellenlänge in einem Bereich mindestens 350-800nm, jedoch auch IR und UV.
- eine Einstellzeit unterhalb einer Sekunde

Die Erfindung wird nachstehend anhand der schematischen Darstellungen näher beschrieben.

Es zeigen:
- Fig.1 :: Den Grundaufbau der Erfindung
- Fig.2:: Den Antrieb
- Fig.3:: Das optische Meßsystem
- Fig.4:: eine Explosivdarstellung der einzelnen Bauteile des Pinholes

Eine planare Struktur S des Grundbausteins besteht aus einem äußeren Rahmen R in den elastische schmale Stege ST eingearbeitet sind, die an ihren Gelenkstellen Aussparungen aufweisen, um die Verbindungsstellen klein und elastisch zu halten.

Die Stege ST halten zwei innere Grundplatten G1 und G2, an denen zwei sich mit ihren parallelen Kanten gegenüberstehende Schneiden Sc1,2 befestigt sind. An die Grundplatten G1 und G2 sind seitlich Magnete M eines elektromagnetischen Aktuators befestigt, die in die im Rahmen R befestigten elektrische Spulen SP hineinragen.

Durch elektrische Ansteuerung bewegen sich die Magnete in den Spulen und erzeugen dadurch eine Bewegung der Schneiden SC1, SC2 in Pfeilrichtung gegeneinander.

Die elastischen Stege ST werden senkrecht zu ihrer Längsrichtung bewegt und sind in dieser Richtung elastisch an ihren Gelenkstellen, während die Anordnung senkrecht zur Bewegungsrichtung der Schneiden eine hohe Steifigkeit aufweist.

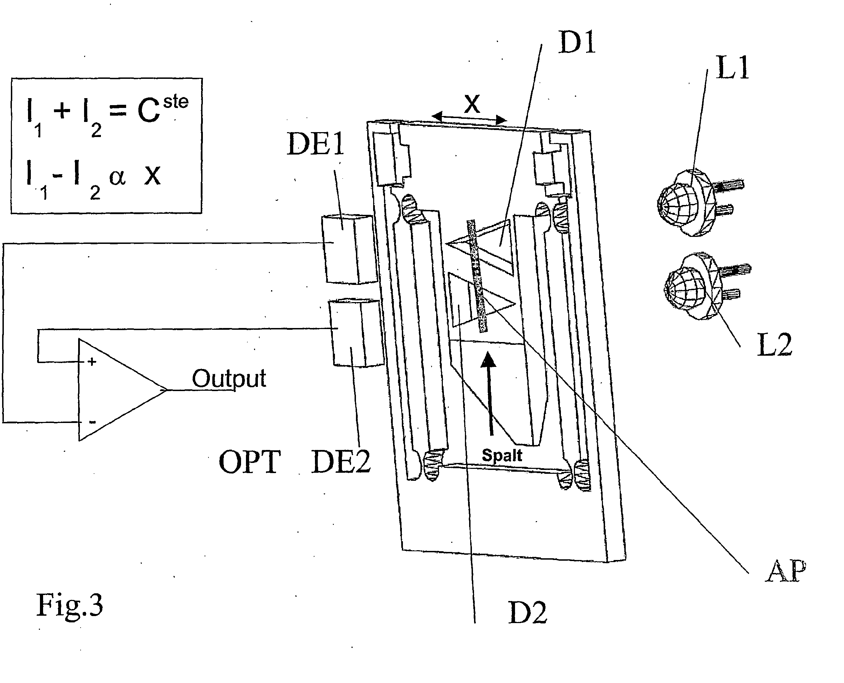

Von der Positionskontrolle OPM sind hier nur die Dreiecke D1 und D2 für jede Schneide dargestellt. (siehe Fig. 3 und zugehörige Beschreibung).

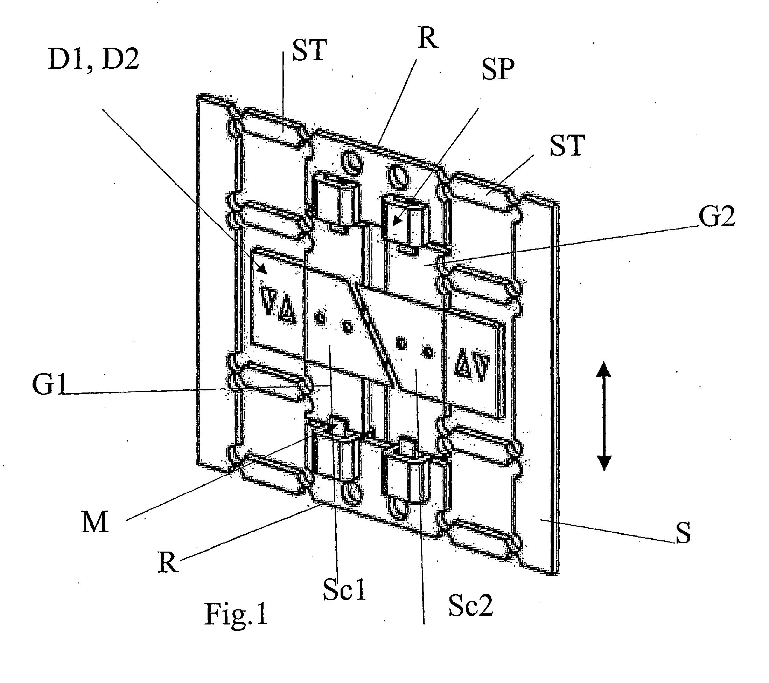

Fügt man nun zwei planare Grundbausteine nach Fig. 1 so zueinander, daß die Schneiden beider Grundbausteine zueinander einen Winkel, vorzugsweise 90 Grad einschließen, läßt sich durch jeweilige Veränderung des Abstandes der Schneidenkanten ein hochgenau variables Viereck, vorzugsweise ein Quadrat erzeugen , das als Pinhole in einem Laser- Scanning- Mikroskop dient.

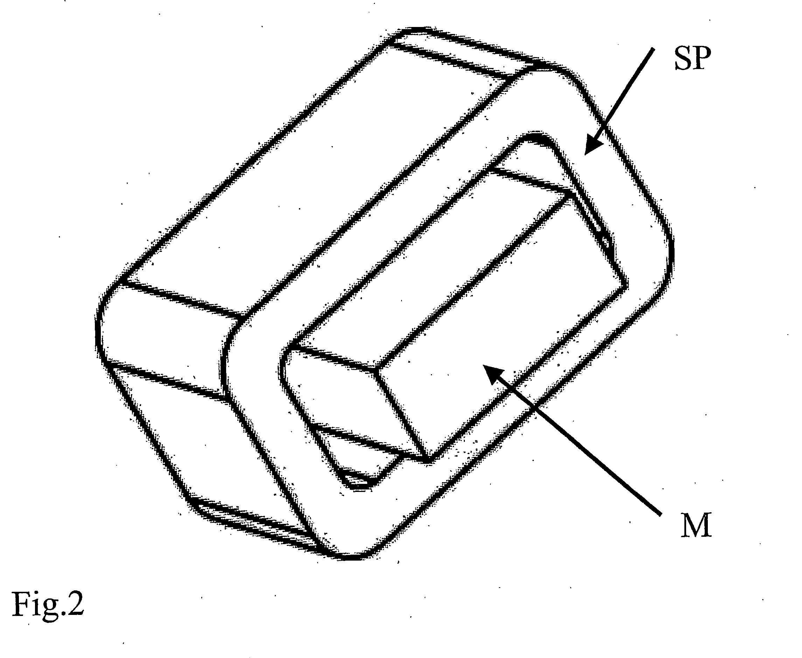

In Fig. 2 sind vergrößert der Magnet M und die elektrische Spule SP eines elektromagnetischen Aktuators dargestellt.

In Fig. 3 ist das optische Meßsystem dargestellt.

Hinter den entgegengesetzt ausgerichteten Dreiecken D1, D2, die in einer zur Verschieberichtung (Pfeil) senkrechten Reihe angeordnet sind, ist ein senkrecht zur Verschieberichtung orientierter Spalt AP angeordnet (Es kann sich auch um zwei Spalte handeln), die von einem oder bevorzugt zwei LEDs L1, L2 für jeweils eine Dreiecksöffnung beleuchtet werden.

Durch die Schneidenbewegung verändert sich der Durchlaßbereich der Dreiecke D1, D2 in Bezug auf den Spalt oder die Spalte AP. Das bedeutet eine Veränderung der Lichtmenge, die von zwei Detektoren DE1, DE2 auf der anderen Seite entgegengesetzt der Lichtquellen separat für jedes Dreieck erfaßt werden.

Ihre Lichtmengendifferenz bildet ein proportionales Stellsignal für den Verschiebeweg X, während die Summe der Detektorsignale gleich bleibt und somit das Signal in erster Näherung unabhängig von Lichtmengenschwankungen gewährleistet.

Durch Erfassung der Stellsignale in X-und Y Richtung wird eine Information über den Öffnungszustand des Pinholes ermöglicht.

Eine Eichung der Verstellanordnung kann durch externe Messung oder direkt in einem LSM erfolgen.

Das Positionserfassungselement kann natürlich vorteilhaft auch über einen sonstigen, nicht optischen Sensor z.B. kapazitiven, induktiven oder elektromagnetischen Sensor realisiert werden, solange durch dieses Positionserfassungselement ein elektrisches Signal zur Rückkopplung bereitgestellt wird.

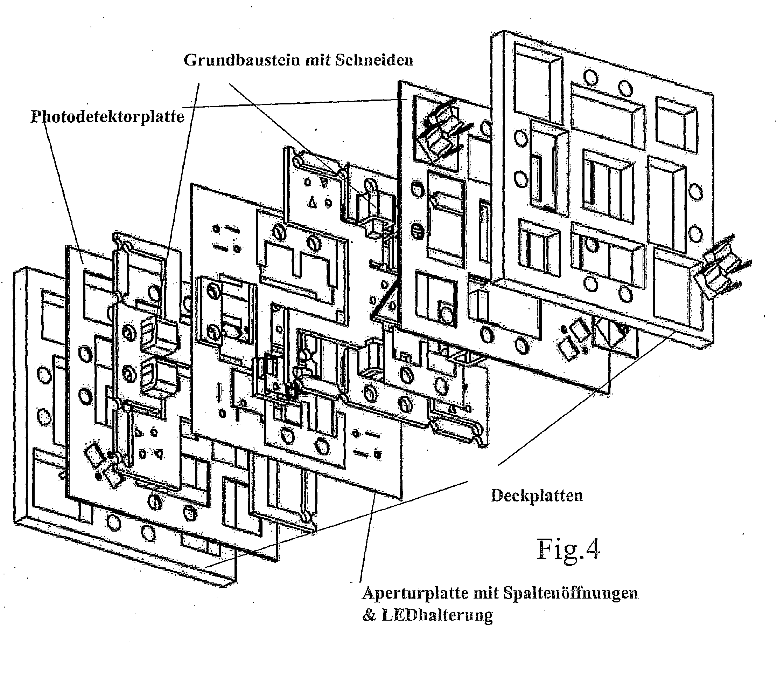

In Fig.4 sind die einzelnen Elemente symmetrisch um die Aperturplatte mit Spaltenöffnungen angeordnet und bestehen aus 2 Grundbausteinen mit Schneiden zur mechanischen Pinholeöffnung, Photodetektorplatte für die Detektion der Lichtmengen und Deckplatte für elektronische Bauelemente und zur Abdeckung gegen Streulicht.

Alle planaren Elemente sind durch Stifte positioniert und befestigt.

Alle Elemente können durch verschiedenartige Bearbeitungsmethoden durch eine Vielzahl von Materialen realisiert werden, insbesondere metallische Materialen, Keramikmaterialien, Halbleiter und Kunststoffmaterialien.

## Patentansprüche

1. Einstellbares Pinhole, insbesondere für den Beleuchtungs und/oder Detektionsstrahlengang eines Laser-Scanning-Mikroskopes, bestehend aus mindestens zwei planaren Grundbausteinen (S), bestehend aus einem äußeren Rahmen der stegartige Gelenkstellen (ST) aufweist, an denen mindestens eine in einer Richtung verschiebliche Schneide mit Schneidenkante (Sc1, Sc2) angebracht ist,
wobei die Grundbausteine zur optischen Erfassung der Position der mindestens einen Schneidenkante zwei asymmetrische Öffnungen (D1, D2) mit entgegengesetzter Orientierung, aufweisen, die von mindestens einer Lichtquelle (L1, L2) durchstrahlt werden, sowie aus einem vor oder hinter den Öffnungen vorzugsweise senkrecht zur Verschieberichtung der mindestens einen Schneidenkante orientierten Spalt (AP) durch den die Lichtmenge für jede asymmetrische Öffnung separat detektiert wird.

2. Pinhole nach Anspruch 1, wobei als Öffnungen zwei Dreiecke mit entgegengesetzter Orientierung vorgesehen sind.

3. Pinhole nach Anspruch 1 oder 2,
wobei ein Grundbaustein zwei zueinander verschiebliche Schneidenkanten enthält, die zueinander einen vorzugsweise parallelen Zwischenraum einschließen.

4. Pinhole nach einem der Anspruche 1-3,
wobei zwei Grundbausteine mit je zwei Schneiden vorgesehen sind und die Verschieberichtung der Grundbausteine zueinander einen Winkel, vorzugsweise 90 Grad, einschließt.

5. Pinhole nach einem der Ansprüche 1-7,
wobei zum Antrieb der Verschiebung elektromagnetische Aktuatoren vorgesehen sind.

6. Einrichtung zur optischen Erfassung der Position und Öffnung eines Pinholes nach Anspruch 1 mit mindestens zwei zueinander in ihrer Lage veränderlichen Elementen (Sc1, Sc2), die zwischen sich eine veränderliche Lichtöffnung einschließen, insbesondere im Beleuchtungs- und/ oder Detektionsstrahlengang eines Laser- Scanning-Mikroskopes,
wobei zwei asymmetrische Öffnungen (D1, D2) mit im wesentlichen entgegengesetzter Orientierung vorgesehen sind, die von mindestens einer Lichtquelle (L1, L2) durchstrahlt werden und vor oder hinter den Öffnungen ein Spalt (AP) vorgesehen ist, Wobei die Lichtmenge durch den Spalt für jede Öffnung separat detektiert wird.

7. Einrichtung nach Anspruch 9, wobei die Position und Öffnung der Schneidenkanten über ein integriertes optisches Meßsystem in einem geschlossenen Regelkreis kontrolliert werden.

## Claims

1. Adjustable pinhole, in particular for the illumination and/or detection beam path of a laser scanning microscope,
consisting of at least two planar basic elements (S) consisting of an outer frame which comprises web-like joints (ST), on which at least one blade is provided which can be displaced in one direction and has blade edge (Sc1, Sc2),
wherein the basic elements for optical detection of the position of the at least one blade edge have two oppositely oriented asymmetric openings (D1, D2) through which pass beams from at least one light source (L1, L2), and from a gap (AP) before or behind the openings, oriented preferably perpendicular to the direction of displacement of the at least one blade edge, through which gap the quantity of light is separately detected for each asymmetric opening.

2. Pinhole as claimed in claim 1, wherein two oppositely oriented triangles are provided as openings.

3. Pinhole as claimed in claim 1 or 2, wherein a basic element contains two blade edges which can be displaced with respect to each other and which form a preferably parallel intermediate space with respect to each other.

4. Pinhole as claimed in any one of claims 1 to 3, wherein two basic elements each with two blades are provided and the displacement direction of the basic elements with respect to each other forms an angle of preferably 90 degrees.

5. Pinhole as claimed in any one of claims 1 to 7, wherein electromagnetic actuators are provided for driving the displacement.

6. Device for optical detection of the position and opening of a pinhole as claimed in claim 1, having at least two elements (Sc1, Sc2) which can be changed in their position with respect to each other and which between them form a changeable light opening, in particular in the illumination and/or detection beam path of a laser scanning microscope, wherein two asymmetric openings (D1, D2) having substantially opposite orientation are provided and through them pass beams from at least one light source (L1, L2), and a gap (AP) is provided before or behind the openings, wherein the quantity of light is separately detected for each opening through the gap.

7. Device as claimed in claim 9, wherein the position and opening of the blade edges are monitored by an integrated optical measuring system in a first closed control circuit.

## Revendications

1. Sténopé réglable, en particulier pour le faisceau d'éclairage et/ou de détection d'un microscope à balayage laser, consistant en au moins deux modules de base S planaires, consistant en un cadre extérieur qui comporte des points d'articulation en forme de barrettes (ST), sur lesquelles est monté au moins un couteau mobile en translation dans une direction avec une arête de coupe (SC1, SC2),
sachant que les modules de base comportent deux ouvertures asymétriques (D1, D2) orientées en sens opposés pour la saisie optique de la position de ladite au moins une arête de coupe, ouvertures qui sont traversées par-la lumière d'au moins une source de lumière (L1, L2), ainsi qu'une fente (AP) devant ou derrière les ouvertures, orientée de préférence perpendiculairement à la direction de translation de ladite au moins une arête de coupe, par laquelle la quantité de lumière est détectée séparément pour chaque ouverture asymétrique.

2. Sténopé selon la revendication 1, dans lequel deux triangles d'orientations opposées sont prévus comme ouvertures.

3. Sténopé selon la revendication 1 ou 2,
dans lequel un module de base contient deux arêtes de coupe mobiles en translation l'une par rapport à l'autre,
qui limitent l'une par rapport à l'autre un espace intermédiaire de préférence parallèle.

4. Sténopé selon l'une quelconque des revendications 1 à 3,
dans lequel sont prévus deux modules de base avec deux couteaux chacun et dans lequel la direction de translation des modules de base l'un par rapport à l'autre limite un angle, de préférence de 90°.

5. Sténopé selon l'une quelconque des revendications 1 à 7,
dans lequel des actionneurs électromagnétiques sont prévus pour l'entraînement de la translation.

6. Dispositif pour la saisie optique de la position et de l'ouverture d'un sténopé selon la revendication 1, avec au moins deux éléments (Sc1, Sc2) variables dans leur position l'un par rapport à l'autre, qui limitent entre eux une ouverture variable pour la lumière, en particulier dans le faisceau d'éclairage et/ou de détection d'un microscope à balayage laser,
dans lequel sont prévues deux ouvertures (D1, D2) asymétriques avec des orientations essentiellement opposées, qui sont traversées par au moins une source de lumière (L1, L2) et dans lequel une fente (AP) est prévue devant ou derrière les ouvertures, sachant que la quantité de lumière à travers la fente est détectée séparément pour chaque ouverture.

7. Dispositif selon la revendication 9, dans lequel la position et l'ouverture des arêtes de coupe est contrôlée dans un circuit de régulation fermé par l'intermédiaire d'un système de mesure optique intégré.
